(19) Europäisches Patentamt
European Patent Office
Office européen des brevets

(11) **EP 3 528 457 A2**

(12) **EUROPEAN PATENT APPLICATION**

(43) Date of publication:
**21.08.2019 Bulletin 2019/34**

(51) Int Cl.:
***H04L 29/06*** *(2006.01)*

(21) Application number: **19157787.3**

(22) Date of filing: **18.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.02.2018 US 201862632329 P**

(71) Applicant: **Deutsche Telekom AG**
**53113 Bonn (DE)**

(72) Inventors:
• **MIRSKY, Yisroel**
**8470915 Beer Sheva (IL)**

• **GOLOMB, Tomer**
**8502500 Meitar (IL)**
• **SHABTAI, Asaf**
**7684200 Hulda (IL)**
• **ELOVICI, Yuval**
**7986400 Arugot (IL)**
• **BRODT, Oleg**
**8471621 Beer Sheva (IL)**
• **MIMRAN, David**
**6215505 Tel Aviv (IL)**

(74) Representative: **Lampis, Marco et al**
**Dragotti & Associati Srl**
**Via Nino Bixio, 7**
**20129 Milano (IT)**

(54) **COLLABORATIVE INTERNET-OF-THINGS ANOMALY DETECTION**

(57) A method for collaboration of remote participants in a distributed manner with no central server, on training an anomaly detection model, based on each of the local observations of the participants, wherein, a block-chain protocol is used where the blocks are the current anomaly detection models of a subset of participants. An agent configured to maintain a local model of each participant's application behavior is introduced to each of the participants where a first agent is use to observe the behavior of a participant application. The first agent records new intelligence by updating the local model with new observations and adds the updated local model to a partial block in a blockchain. The blockchain is sent to the agents of the other participants and each agent of the other participants verifies against its own partial blocks, that the received partial block is longer than its own partial block, and that the received partial block is safe. Then the local model of each agent of the other participants is replaced with the updated local model from the verified partial block.

FIG. 1B

EP 3 528 457 A2

**Description**

**Field of the Invention**

The present invention relates to the field of cyber security. More particularly, the invention relates to a method for detecting anomalies in IoT devices.

**Background of the Invention**

The Internet of Things (IoT) is a rapidly growing aspect in which the Internet is evolving. Leading IoT experts believe that soon there will be more than 50 billion devices connected to the Internet, and these devices will offer a variety of applications and services for both daily and critical uses. The vision for these IoT devices is that they will autonomously communicate with one another to improve services and our daily lives

Like many new technologies, the IoT improves our lives but introduces disruptive elements as well. One particular issue associated with IoT devices is that they tend to have vulnerabilities, which in some cases are not treated by the device manufacturer. An attacker can exploit these vulnerabilities for nefarious purposes. Since IoT devices have been integrated into both daily and critical applications, their security is a significant concern.

One existing solution for protecting an IoT device is to install an Intrusion Detection System (IDS). If the IDS is anomaly based, the system can potentially detect new and emerging threats that target the device. However, there are two fundamental challenges with anomaly-based IDSs:

> 1) During the detection system's training phase, all observations are considered benign and are used to train a model which captures the device's normal behavior. Therefore, an attacker who exploits a device during this phase can evade detection entirely.

> 2) Because some legitimate behaviors are rare and event-based, and therefore may not appear in the training data, it is likely that false positives will occur if an anomaly detection model is trained on the observations of just a few devices.

It would be profitable to have an anomaly detection system that overcomes these shortcomings, and it is therefore an object of the present invention to provide such a system.

Other objects and advantages of the invention will become apparent as the description proceeds.

**Summary of the Invention**

A method for collaboration of remote participants in a distributed manner with no central server, on training an anomaly detection model, based on each of the local observations of the participants, wherein, a block-chain protocol is used where the blocks are the current anomaly detection models of a subset of participants; the method comprises the steps of:

> a. introducing to each of the participants an agent configured to maintain a local model of each participant's application behavior;
> b. observing, by a first agent, the behavior of a participant application;
> c. recording, by the first agent, new intelligence by updating the local model with new observations;
> d. adding, by the first agent, the updated local model to a partial block in a blockchain;
> e. sending the blockchain to the agents of the other participants;
> f. verifying, by each agent of the other participants against its own partial blocks, that the received partial block is longer than its own partial block, and that the received partial block is safe; and
> g. replacing the local model of each agent of the other participants with the updated local model from the verified partial block.

In one aspect, the participants may be IoT devices connected to each other over a network.

The method may further comprise the step of ensuring that the collaboration is safe in case where an adversary attacks one or more of the participants by feeding false information; by performing self-attestation, to check if a combined model is safe and model-filtration, to remove possible manipulations from combined models.

The method may further comprise the step of performing load balancing of the network, wherein the participants shares new models in a high frequency and share an established and old model in a low frequency.

A method for efficiently detecting abnormal program control flow, comprising the steps of:

a. tracking jumps between region of the program memory space; and
b. modeling the sequence of the jumps with a probabilistic model, which may be an Extensible Markov Model (EMM).

The Extensible Markov Model (EMM) may be trained in a distributed manner by the participants.

A system for collaboration of remote participants in a distributed manner with no central server, on training an anomaly detection model, based on each of the local observations of the participants, wherein, a block-chain protocol is used and where blocks of the blockchain are the current anomaly detection models of a subset of participants.

In one aspect, the system comprises:

a. an agent for each participant, configured to maintain a local model which captures behavior of an application that is running on the other participants;
b. a second agent for observing the behavior of a participant application, recording new intelligence by updating the local model with new observations, adding the updated local model to a partial block in a blockchain and sending the blockchain to the agents of the other participants;
wherein each agent of the other participants verifies against its own partial blocks, that the received partial block is longer than its own partial block, and that the received partial block is safe, and that the length of the blockchain is equal to or longer than the local blockchain of the participant;

wherein the local model of each agent of the other participants is replaced with the updated local model from the verified partial block.

## Brief Description of the Drawings

In the drawings:

- Fig. 1A shows a flowchart describing the process of an agent's intelligence gathering;
- Fig. 1B shows a flowchart describing the process of an agent receiving intelligence from another agent;
- Fig. 1C shows a flowchart describing the process of intelligence sharing; and
- Fig. 2 (A-C) schematically illustrates an exemplary implementation of the disclosed method;
- Fig. 3 schematically shows in depth look into a result of a test conducted;
- Fig. 4 schematically shows how a window of size 5 works;
- Fig. 5 shows the detection capabilities (represented by the p diff measurement) as a function of the monitored application memory size and the window size;
- Fig. 6 schematically shows the application memory split for different mask size;
- Fig. 8 shows a demonstration of the issues with multi-threaded applications and the suggested fix; and
- Fig. 9 schematically shows the multithreading experiment results.

## Detailed Description of the Invention

Reference will now be made to an embodiment of the present invention, examples of which are provided in the accompanying figures for purposes of illustration only. One skilled in the art will readily recognize from the following description that alternative embodiments of the structures and methods exemplified herein may be employed, *mutatis mutandis*, without departing from the principles of the invention.

The present invention relates to a method for collaboration of remote participants in a distributed manner with no central server, on training an anomaly detection model, based on each of the local observations of the participants, wherein, a block-chain protocol is used where the blocks are the current anomaly detection models of a subset of participants.

In addition, the method of the present invention ensures that the collaboration is safe in the case where an adversary attacks one or more of the participants by feeding false information; This method is to perform both self-attestation (i.e. to check if a combined model is safe) and model-filtration (i.e. to remove possible manipulations from combined models). The method of the present invention enables a participant to learn how to detect current cyber-attacks targeting his own local code (exploitation) in a manner which is very efficient (enough for IoTs).

In an embodiment of the invention, the method of the present invention relates to detecting anomalies in devices that are resource limited, such as Internet of Things (IoT) devices. Assuming that all IoT devices of a specific type simultaneously begin a training phase (in which their own anomaly detection model is trained based on their own locally observed behaviors) it is fairly unlikely that the majority of these IoT devices would be exploited before the majority completes their training phases.

Using this underlying assumption, a lightweight, scalable framework (hereinafter Collaborative Internet of Things Anomaly (CIoTA) detection) is disclosed, which utilizes the blockchain concept and is configured to perform distributed and collaborative anomaly detection on resource limited devices, such as IoT devices.

Throughout the description the following terms are used, and should be interpreted as follows:

**Model** - An anomaly detection entity $M$ that supports the calculation of the distance (the distance is defined below in verified model) between two models, and supports combining (merging) models with other models of the same type. A model which is currently deployed on a local device is denoted as $M_L$.

**Verified Model** - Let $d(M_i, M_j)$ be the distance between models $M_i$ and $M_j$. A model $M_v$ is said to be verified by a device if $d(M_L, M_v) < \alpha$, where $\alpha$ is a user given parameter of the system.

**Combined Model** - A model created by merging a set of models together. The combined model only contains elements which are present in at least $p_c$ percent of the models in the set.

**Report** - A record consisting of a model $m$ and a cryptographic signature $S(m, seed)$ that uses a private key of the model and a random seed.

**Block** - A list of reports on the same seed from different devices which has $L$ entries. If a block has less than $L$ entries, then it is referred to as a *partial block* or a *block in progress.*

**Trusted Model** - The combined model resulting from merging the models from the reports in the most recently closed block. Since reports originate from different devices (verified by their signatures), and the reports have had time to be verified by the majority, the combined model is considered to have collaborative trust.

**Chain** - A blockchain consisting of CIoTA's blocks for a type of IoT device. The block's acceptance criterion is for the block to include precisely $L$ entries, while the criterion for agreeing on a *partial block* is for the *combined model* which results from merging the models to be a *verified model.* The length of a chain is the total number of completed blocks in that chain. Finally, a chain may have at most one *partial block* appended to the end of the chain.

**Agent** - A program that runs on an IoT device which is responsible for training and executing the local model $M_L$, downloading broadcasted chains to replace $M_L$ and the locally stored chain, and periodically broadcasting the locally stored chain, with the latest $M_L$ as a report in the *partial block.* An agent only replaces its locally stored chain if the downloaded chain is longer than the existing chain. Furthermore, an agent only uses the downloaded chain's *partial block* if the agent can attest that the combined model, resulting from the *partial block,* is a *verified model.*

A blockchain is a database that is distributed among a plurality of devices, consisting of a chain of data blocks that is managed by the majority of the devices in the network. Each data block contains a list of records and a hash value of the previous block. A block is accepted into the chain if it satisfies specific criteria.

The present invention uses a blockchain to incrementally update a trusted anomaly detection model, via self-attestation and consensus among the IoT devices. Thus, the blockchain acts as a secured distributed ledger to ensure that a majority of the devices are using the latest validated anomaly detection model, and can collaboratively construct an ongoing set of validated models, each of which has been trained by a single device. A closed block in the chain represents a validated model which is ready for use that has been verified by a majority of devices in the system.

According to an embodiment of the present invention, CIoTA uses an Extensible Markov Model (EMM) as the anomaly detection model. The EMM tracks a program's regular memory jump sequences and can be incrementally updated and merged with other models. To introduce new benign concepts to merged models, new states are accepted to the EMM only when there is a consensus among the models.

The present invention, defines and evaluates a novel approach to efficiently detect abnormal control-flows at a set granularity. The approach is efficient in because the program counter's flow is tracked between regions of memory, and not actual memory addresses or system calls. As a result, the model is compact (has relatively few states) and is suitable for devices with limited resources (IoT devices).

Extensible Markov Model

In order to efficiently model sequences, a probabilistic model is used called a Markov chain (MC). An MC is a memory-less process, i.e., a process where the probability of transition at time t only depends on the state at time t and not on any of the states leading up that state. Typically, an MC is represented as an adjacent matrix $M$, such that $M_{ij}$ stores the probability of transitioning from state $i$ to state $j$ at any given time $t$. Formally, if $X_t$ is the random variable representing the state at time $t$, then $M_{ij}$ can be calculated by Eq. 1, where $P(a)$ is the probability of $a$.

$$M_{ij} = P\left(X_{t+1} = j \mid X_t = i\right) \qquad \text{Eq. 1}$$

An EMM is the incremental version of the MC. Let $N = [n_{ij}]$ be the frequency matrix, such that $n_{ij}$ is the number of transitions which have occurred from state $i$ to state $j$. From here, the MC can be obtained by Eq. 2, where $n_i = \sum_j n_{i,j}$ is the total number of outgoing transitions observed by state $i$.

$$M = \left[M_{ij}\right] = \left[\frac{n_{ij}}{n_i}\right] \qquad\qquad \text{Eq. 2}$$

By maintaining N, M can be updated incrementally by simply adding the value '1' to $N_{ij}$ whenever a transition from i to j is observed. In most cases, N is a sparse matrix (most of the entries are zero). When implementing an EMM model, one can use efficient data structures (e.g., compressed row storage or hash maps) to track large numbers of states with a minimal amount of storage space.

If N was generated using normal data only, then the resulting MC can be used for the purpose of anomaly detection. Let $Q_k$ be the last k observed states in the MC, where k $\in$ { 1, 2, 3, ... } is a user defined parameter. The simplest anomaly score metric is the probability of the observed trajectory Qk =(s0, ..., st) w.r.t the given MC. This is given by Eq. 3:

$$Pr(Q k) = Pr(\Lambda_{i=0}^{k}(Xi = si)) = \prod_{i=0}^{k-1} Msi, si+1 \qquad \text{Eq. 3}$$

When a new transition from state i to state j is observed, it is asserted that the transition was anomalous if P r(Q k) < $p_{thr}$, where $p_{thr}$ is a user defined cut-off probability. However, for large k, or in the case of noisy data, Pr(Qk) can generate many false positives. In this case, the average probability of the sequence can be used

$$\overline{Pr}(Qk) = \frac{1}{t}\sum_{i=0}^{k-1} M\, si, si+1 \qquad \text{Eq. 4}$$

Detecting Abnormal Control-Flows in Memory

To track the logical address of the PC in real-time, we can use a kernel debugger such as the Linux performance monitoring API (linux/perf event.h) .

The debugger runs in parallel to the target application and tracks addresses of the PC. The debugger periodically reports the addresses observed since the last report. The sequence of observed addresses can then be modeled in the MC.

Modeling a memory space as states in an MC is a challenging task. Due to memory limitations, it is not practical to store every address in memory as a state. Doing so would also require to track the location of the PC after every operation. This would incur a significant overhead. Therefore, the present invention propose that a state in the MC should be region of memory. Also the debugger is configured to report right after branch and jump instructions. To accomplish this, a kernel feature was used via the debugger.

Let $PC_{addr}$ be the current logical address of the application's program counter, where 0x0 is the start of the app's logical memory-space. Let B be the partition size in Bytes, defined by the user. The MC state i, in which the program is currently located, is obtained by:

$$i = \left\lfloor \frac{PC\ addr}{B} \right\rfloor \qquad\qquad \text{Eq. 5}$$

The partition size of a memory space is a user defined parameter. When selecting the partition size, there is a trade off between the true positive rate and memory requirements. For an Apache web-server, it was found that a partition size of 256 Bytes was is enough to detect the evaluated attacks, where the memory consumption of the model N was only 20KB of memory.

Algorithm 1, presents the complete process for modeling and monitoring an application's control-flow in memory. There, T grace is the initial learning time given to the MC, before we start searching for anomalies.

Algorithm 1 - The algorithm for training an MC, and detecting anomalies in an application's control flow via the memory.

```
1: function Monitor (app name, k, B, p thr, T grace)
2: N ← DynamicSparseMatrix() . // init MC
3: Qk ← F IF O(k) // init state trace ring-buffer
4: i ← 0 // initial state
5: fd ← register (app name) // track app with debugger
```

```
6: while buffer ← read (fd) do
7: for addr ∈ buffer do
```

8: $j = \left\lceil \frac{PC\ addr}{B} \right\rceil$  // determine current state

```
9: if notInGrace(T grace) and Pr̄(Qk) < p thr then
10: raise alert
11: else
12: N ij ++ // update MC
13: i = j
```

## Collaborative Training of EMMs

Multiple devices can collaborate in parallel to train N. The benefit of parallel collaboration is (1) arriving at a converged/stable model much faster, and at a rate which scales with the number of collaborators, and (2) increasing the likelihood of observing rare yet benign occurrences, which reduces the false positive rate. To collaborate across multiple devices, it was assumed that the devices' hardware, kernel, and target application (being monitored) are of the same version. For example, all of the Samsung smart-fridges of the same model. Let N be a set of EMM models, where $N_{ij}^{(k)}$ is the element N ij in the k-th model of N. Since it is assumed that multiple devices statistically observe the same state sequences, then EMMs (N) trained at separate locations can be merged into a single EMM. Since an EMM is a frequency matrix, the models can be combined by simply adding the matrices together by

$$N^* = [N^*{}_{ij}] = \left[ \sum_k N^{(k)}{}_{ij} \right] \qquad \text{Eq. 6}$$

It is critical that the combined model N* be trained on normal behaviors only. However, it cannot be assumed that all models have not been negatively affected. The present invention propose two security mechanisms to protect N*: model-attestation
and abnormality-filtration (Model -filtration).

Abnormality-filtration (Model -filtration) - is used to combine a set of models N into a single model N*, in manner which is more robust to noise and adversarial attacks than (6). The approach is to filter out transitions found in N* if the majority of models in N have not observed the same transition. To produce N* from N in our framework, Algorithm 2 is performed, where p $_a$ the minimum percent of devices which must observe a transition in order for it to be included into the combined model. After forming the MC model M* from N* using (2), an agent can attest that M* is a verified model via model-attestation.

Model-attestation - is used to determine whether a trusted model N (i) is similar to a given model N (j). If N (j) is similar, than it is considered to be a verified model with respect to N (i) . To determine the similarity, we measure the linear distance between the EMMs, defined as

$$d(N^{(i)}, N^{(j)}) = \frac{\sum_{k=1}^{\dim(M)} \sum_{l=1}^{\dim(M)} \left| M_{kl}^{(i)} - M_{kl}^{(j)} \right|}{\dim \ (M)^2} \qquad \text{Eq. 7}$$

where dim(M) is the length of M's dimensions, and M is the Markov chain obtained from N. A local device i can attest that model N$^{(j)}$ is a self-similar model, if $d(N^{(i)}, N^{(j)}) < \alpha$, where $\alpha$ is a parameter of the framework.

| Algorithm 2 |  |
| --- | --- |
| function COMBINE(**N**, $p_c$) |  |
| $N \leftarrow$ empty_EMM() | //{initialize empty frequency matrix} |
| for $n_{ij} \in N$ do |  |
| $C \leftarrow 0$. | //{initialize the consensus counter} |
| for $k \in 1: |N|$ do |  |
| $n_{ij} \leftarrow n_{ij} + N_{ij}^{(k)}$ |  |
| if $N_{ij}^{(k)} > 0$ then |  |

(continued)

| Algorithm 2 |
| --- |
| $C++$ |

if $\dfrac{C}{N} \le p_c$ then          //{no consensus on element $ij$}

$\qquad n_{ij} \leftarrow 0$

return $N$

CIoTA Blockchain

As a manner of analogy, assume that there is an agency called CIoTA which has many agents, each of which is in an enemy's territory. The mission of the agents is to detect malicious acts, gather intelligence about what is happening and to share a collection of intelligence (as rumors) with other agents. Because an agent is in the enemy's territory, the agent may receive false intelligence which introduces noise into the rumors conveyed to the other agents. Therefore, an agent will only trust a rumor (intelligence) if that agent knows that at least an amount of $p_c$ other agents have heard the same rumor. Finally, an agent accepts the most recent set of trusted rumors, $L$, as the latest description of the territory.

This scenario is implemented in the CIoTA framework as follows. Each IoT device has an agent which maintains a local model $M_L$ that is used to detect malicious behaviors in a particular application. An agent records new intelligence by updating $M_L$ with observations on the application's behavior. An agent shares its intelligence ($M_L$), in the form of a rumor, by adding $M_L$ to the chain's *partial block,* and then sending the chain to neighboring agents in the network. Other agents will only accept this *partial block* if it is longer than their own *partial block,* and if they can attest that it is safe (by verifying it against their own local model). Thus, the *partial block* only grows if the majority of agents have verified that it contains a safe model. Once the *partial block* contains $L$ reports, it is closed as a completed block. Therefore, an agent receives the latest intelligence from its fellow agents by replacing $M_L$ with the combined model contained within the newest closed block. Finally, to ensure that the rumors have indeed come from a specific agent, rumors are signed by a private key and verified with the respective public key.

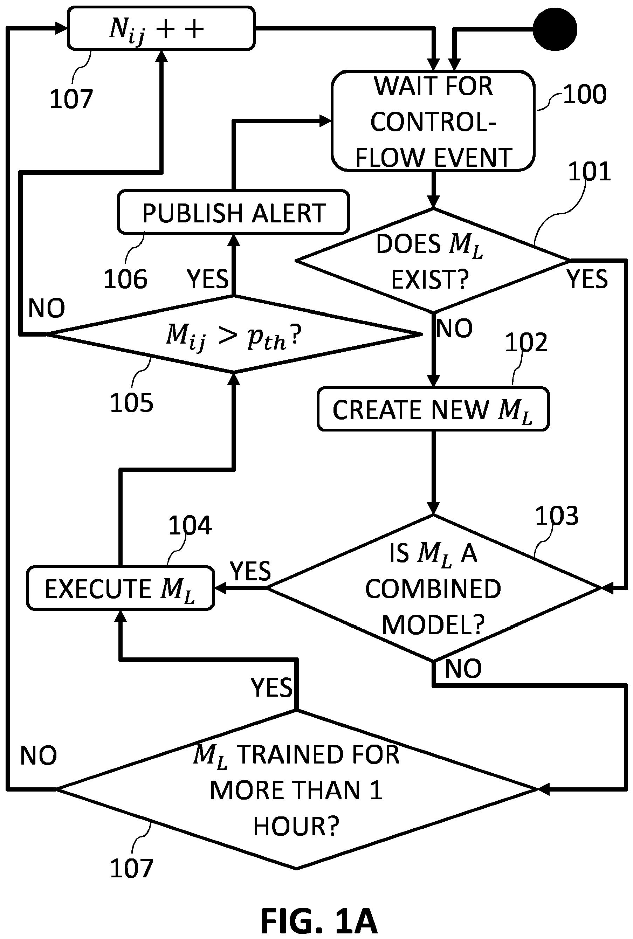

The following describes three processes performed by an agent in parallel, according to an embodiment of the present invention. Fig. 1A shows a flowchart describing the process of an agent's intelligence gathering, according to an embodiment of the present invention. Each IoT device begins by checking in stage 101 if a local model $M_L$ exists, and if not creating its local model $M_L$ in stage 102 after which, in stage 103, $M_L$ is checked to see if it is a combined model. Given that $M_L$ is a combined model the process continues to stage 104 to continuously collect intelligence about its territory (local application), and detect anomalies in the collected intelligence using $M_L$ in stage 105 by comparing each member in $M_L$ to $p_{th}$, wherein if a member is found that exceeds the threshold an alert is published in stage 106. If the $M_L$ does not raise an alert, the device updates $M_L$ in stage 107 to support the new intelligence. If stage 103 finds that $M_L$ is a new model, $M_L$ is given a brief period of training from all intelligence unconditionally which is verified in stage 108. If infected, this short period will not affect the other agents, since rumors (broadcasted models) are only accepted if verified by the majority of agents. The whole process of Fig. 1A is triggered by a control-flow event in the first stage 100.

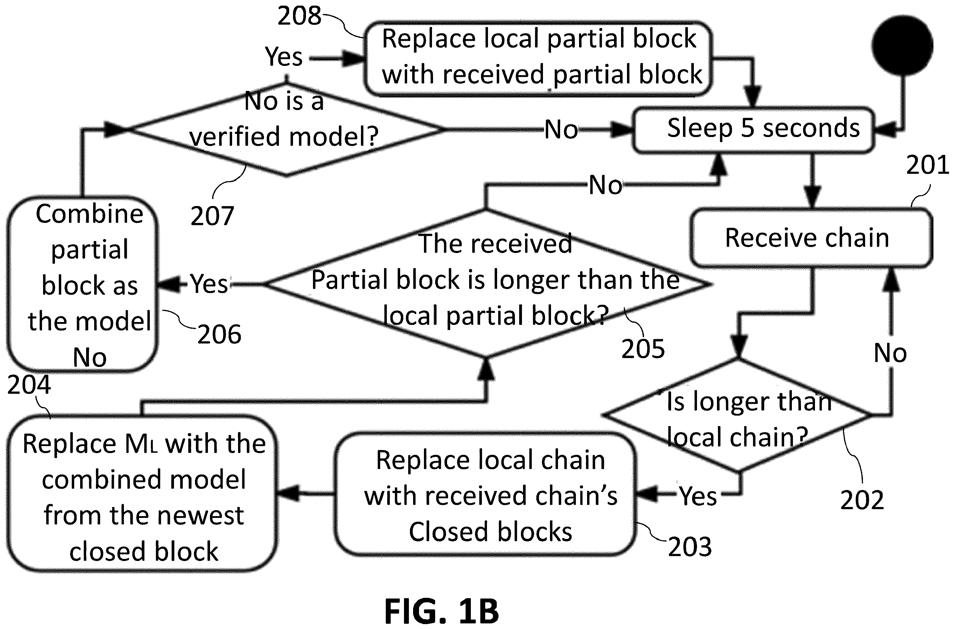

Fig. 1B shows a flowchart describing the process of an agent receiving intelligence from another agent, according to an embodiment of the present invention. After the local agent $L$ receives, in stage 201, a chain $C_R$ from agent $R$, $L$ checks, in the next stage 202, if $C_R$ is longer than $C_L$ (i.e. the local chain) and contains valid signatures. If these conditions hold, the blocks in $C_L$ are replaced in stage 203 by those in $C_R$, and the last completed block is used to form a combined model (Algorithm 1) which replaces $M_L$ in stage 204, after which L checks in stage 205 if the *partial block* in $C_R$ is longer than the *partial block* in $C_L$. If this condition holds the in stage 206 the combined model from the *partial block* undergoes the validation test in Algorithm 2, as result of which if the combined is verified (stage 207) then $C_L$ is updated with the *partial block* from $C_R$ in stage 208.

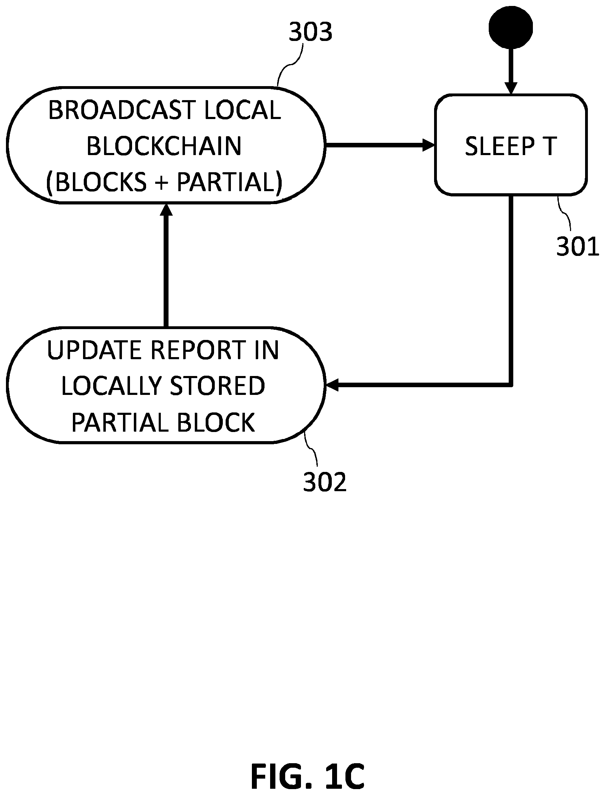

Fig. 1C shows a flowchart describing the process of intelligence sharing, according to an embodiment of the present invention, in which an agent periodically (i.e. every T time elapses, stage 301) updates its report in the locally stored chain's *partial block* in stage 302. The agent then broadcasts the entire locally stored chain to all neighboring agents in stage 303.

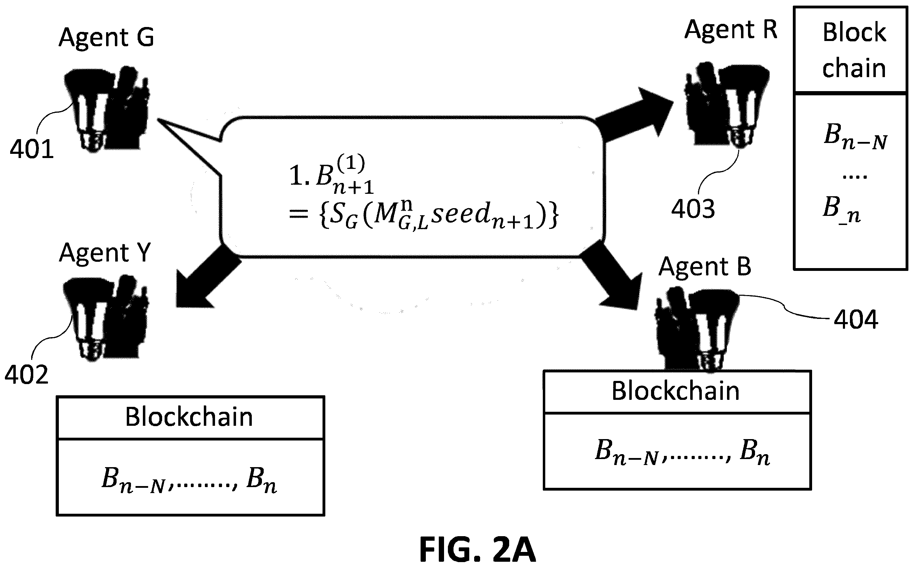

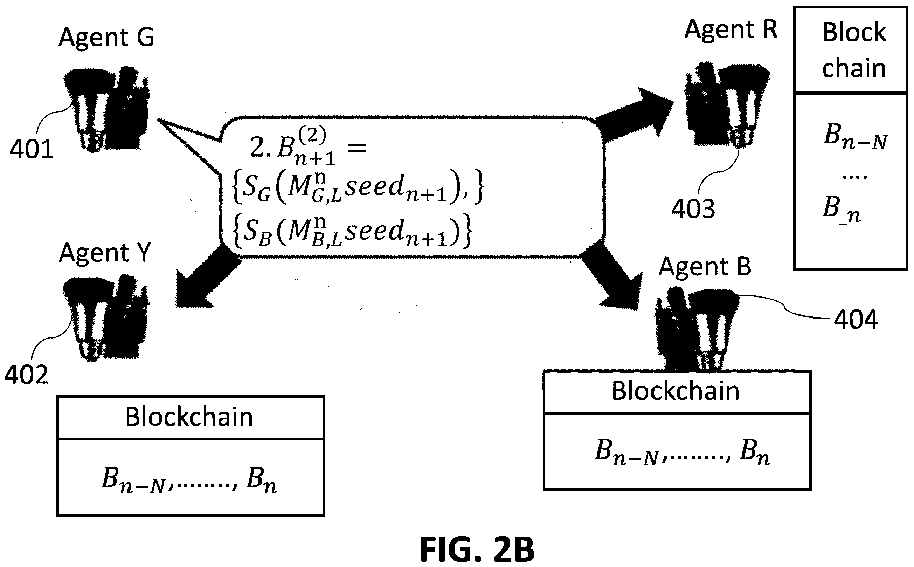

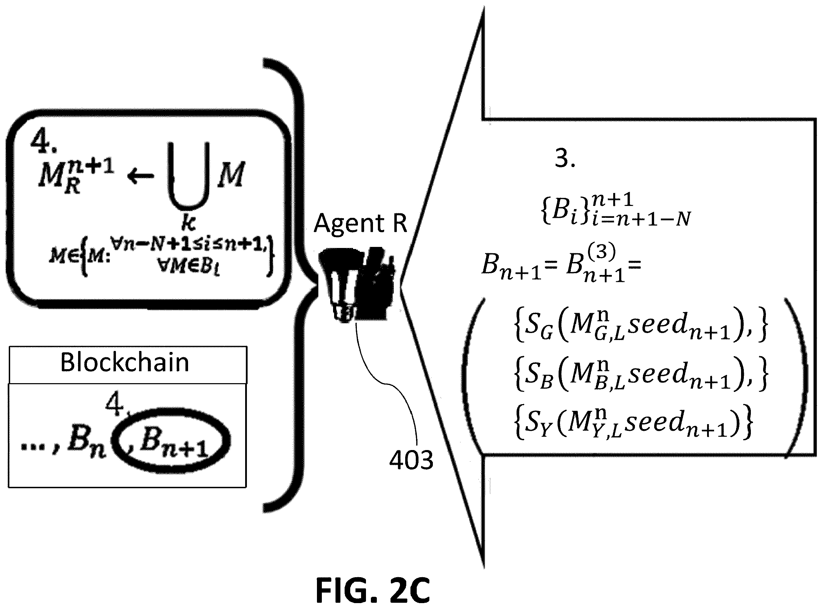

Figs. 2A-2C schematically illustrate an exemplary implementation of the disclosed method, in which CIoTA is installed on a set of four IoT smart bulbs, 401, 402, 403 and 404, with the maximum number of reports in a block ($L$) set at 3. Each device (bulb) maintains a list of the last $N$ blocks, $B_{n-N}$ to $B_n$, to limit the amount of memory consumed by the locally stored chain. If there is no *partial block,* a bulb can create a new *partial block* or add/update the existing *partial block.* Fig. 2A schematically illustrates bulb 401 attempting to create $B_{n+1}$ with the device's report on its model, $M_{G,L}$ and randomly generated $seed_{n+1}$. In Fig. 2B bulb 404 contributes to $B_{n+1}$ by expanding $B_{n+1}$ with its report, which is a signature on $M_{B,L}$ and $seed_{n+1}$. Bulb 403 completes the block by adding its report to the block, causing all of the agents to update their models with a combined model based on all of the models in $B_{n+1}$, as shown in Fig. 2C.

The main assumption of the present invention is that an attacker cannot exploit a large number of devices within a short period of time, while simultaneously evading $M_L$'s detection. Furthermore, CIoTA assumes that reports in a block came from the reporting device; otherwise, an attacker could simply broadcast fake chains. To validate the source, according to an embodiment of the present invention, a Public-Key Infrastructure (PKI) is used, which allows identification and authentication of every device, or a shared secret among the agents, which prevents an outsider's interference in the protocol.

PKI management is cumbersome and introduces new dangers, and another option is suggested, which is to implement CIoTA inside the TrustZone of IoT devices. A TrustZone is a safe house on a device which has access to untrusted territory within the device. In this setup, the agent, along with a symmetric encryption key (provided by the system's administrator), are located in the TrustZone. Thereby, the agent is able to securely communicate with other agents, while avoiding the issues of PKI.

A system according to the present invention may be attacked in one of various possible attack vectors. The goal of an attacker is to execute his/her own persistent logic on the IoT device. During the attack, the attacker may succeed in negatively affecting $M_L$ before it is shared with the other agents via the *partial block*. However, in this case, the majority of the other agents will either reject the *partial block* because the verification Algorithm 2 will fail, or will omit the additional behaviors (new transitions) while forming the combined model in Algorithm 1. Moreover, if the agent is in the TrustZone, $M_L$ will be replaced at the completion of the next block, and then the malware will be detected.

Another possibility is that the attacker will try and sabotage the agent. However, since the agent is installed at a higher level than the infected application (e.g., the kernel or the TrustZone), accessing the agent's memory address will require additional exploits. This requirement creates a *catch-22* effect since the attacker needs to perform additional actions (by exploiting the device further) to gain access to the agent, yet doing so creates anomalies in the control-flow which in turn raises alerts.

Furthermore, an attacker might attempt to alter the anomaly detection model by creating similar alterations to at least $p_c$ percent of the models inside the *partial block,* and then broadcast the chain. However, this is challenging both because the deployment may be widespread geographically, and because the attacker must obtain a large number of private keys when employing PKI or extract the private key from the TrustZone. According to an embodiment of the present invention, in order to ensure a strong level of security, the values of $p_c$ and $L$ are set relatively high, and diverse keys are used if possible.

While detection is a powerful tool for security, detection without action is meaningless. Therefore, according to an embodiment of the present invention, an agent in CIoTA applies one or more of the following policies after detecting an attack:

1. The agent sends alerts to a control server,
2. The agent suspends the infected application via the kernel, or
3. The agent restarts the application.

The selected policy depends on the application of the IoT device and how critical its operations are.

Simulation Results

To evaluate CIoTA an IoT simulation testbed was used, consisting of 48 Raspberry Pi devices. The testbed emulated two types of IoT devices: smart cameras and smart lamps. During the experiments both code injection attacks and code reuse attacks were executed. The experiments were carried out as follows:

1. CIoTA agents were installed on each of the Raspberry Pi devices, together with a shared private key (PKI was not used in the evaluation).
2. After approximately one hour of benign operation, one of the devices was attacked with an exploit which then injected malicious code.
3. The malicious code behaved as a bot which attempts to connect to its Command and control once every minute.

All of the agents were initialized with the following parameters:

- $T$ (Broadcast interval): one minute
- $L$ (Block size): 20
- $p_c$ (Combined model, element-wise consensus): 75%
- $\alpha$ (Verification distance): 0.05
- $p_{thr}$ (Anomaly score threshold): 0.025

8

To evaluate the performance of a combined model, its anomaly score was measured before and after a code injection attack. The probabilities were averaged over windows of 1000 observations. It was observed that by joining more models together, a stronger consensus is achieved much faster than using a single model. With $L = 20$, it can be seen that the malware's activity can be easily detected with zero false positives. Thus, the knowledge of the masses is captured in the combined model, which assists each agent in distinguishing between new benign events and malicious activities. The results were similar for both exploits and use cases.

To evaluate how well CIoTA performs against adversarial attacks, the case where attacks were performed when CIoTA is the most vulnerable was examined (at CIoTA's deployment, before any device has shared its chain). During this time, one or more devices were attacked with an exploit, followed by some malicious code execution. It was found that if the malicious code is not similar to the original application, then other agents will reject the *partial block* due to discrepancies in the combined model (Algorithm 2).

Furthermore, the case where the attacker's malicious code is similar to the application's control-flow (similar transitions in memory) was also investigated. As a result, all anomaly scores were borderline but did not exceed the threshold (no alerts were raised), and the modified $M_L$ was propagated to the other agents via the *partial block* of the chain. In this case, it was observed that the other agents were still capable of detecting the attack although they were using the infected model. This is because Algorithm 1 filtered new behaviors which did not conform to the consensus. It was observed that even if an attacker compromises several models, the attacker must compromise at least $p_c$ of the models in the *partial block* to evade detection.

Finally, since CIoTA is designed for resource limited devices, the CPU utilization and memory consumption were measured during runtime. It was found that as an upper limit for CIoTA's overhead, the CPU utilization, memory consumption, and executable size of the agent were 6.5%, 60KB, and 260KB respectively.

In an embodiment of the invention a parameter optimization of the system was done and to predict the optimal parameters initiation of the system without the necessity to run experiments on the specific device. Also a methodology for optimizing parameters on every application was developed.

Two main parameters of Mask size and Window size were checked and their influence on the model. Also the correlation between the application size to those parameters was checked. All the experiments had same parameters except the targeted parameter.

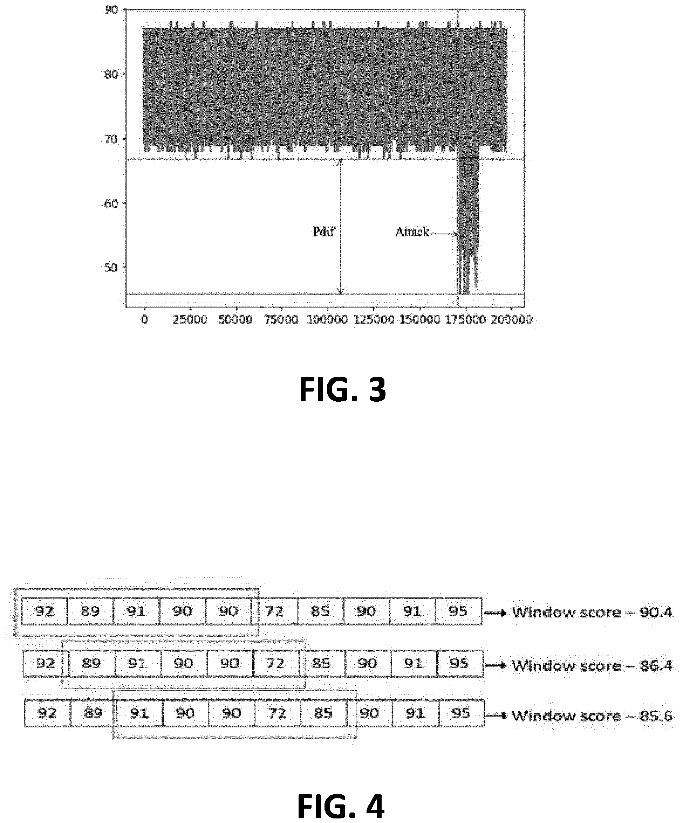

To evaluate the model, P dif - the average window score difference was measured, meaning, the average probability of all the jumps within the window, between the lowest score before the attack to the lowest score after the attack, as can be seen in Fig. 3, which schematically shows in depth look into a result of a test conducted.

Using this measurement, it can be learned how significant are the probabilities drops when attacked. A greater difference means the model is better. If so, the model is more robust and have less false positives. In simple words, the bigger the Pdif is the lower the threshold can be set. So the model is less likely to alert on regular behaviors thus will be better and stronger.

For each parameter several experiments were conducted, the goal was to find optimal parameters without any dependency on the application size therefore the tests were run on multiple app sizes in a range between 0.1 - 1.1, those values are percent from 1GB and evaluated by P dif. The application was a simple log server that it's size was modified. All experiments run on Raspberry Pi 3 and had 30m training time then 10m benign phase and then the attack started.

First parameter: Window Size. Due to the noisiness nature of the EMM, the anomaly score was defined as the average of last n scores, therefore smoothening the score and evading false alarms, window size is determining how much jumps are included into the probability averaging window. Fig. 4 schematically shows how a window of size 5 works. Three windows of size 5 are shown. The first window 401 (as it contains the higher scores) has the average score of 90.4. The second window, 402 contains the lowest scores has the average score of 86.4, and the third window 403, has an average score of 86.6 the bigger the window is - it is harder to change the score of the agent, which may cause false negatives. The Smaller the window is - it is easier to change the agent score, which can cause false positives. Fig4 shows an example of setting the window size to 5. The bigger window size, the detection mechanism is less sensitive and therefore, will result in lower false alarms, but with a lower detection rate (i.e., false negative). On the other hand, smaller windows will make the system (or model) more sensitive and will detect more attacks, but at the cost of a higher false alarm rate.

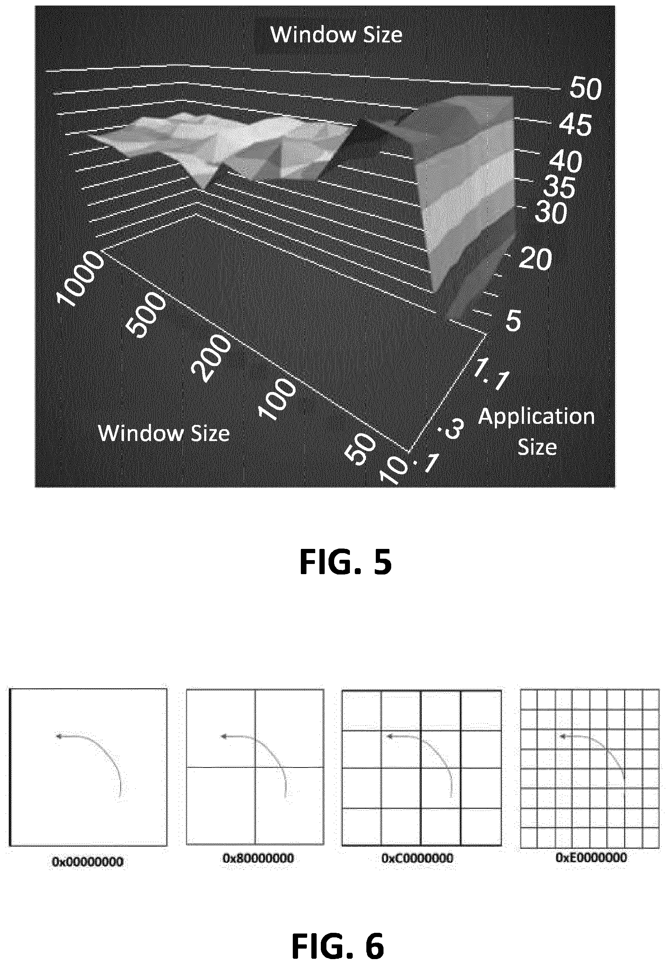

Fig. 5 shows the detection capabilities (represented by the p diff measurement) as a function of the monitored application memory size and the window size. It is shown that for different application size, the optimal window size is around 50 to 70.

Mask Size - 8 digits in hexadecimal that when converted into binary it serves as a delimiter of the number of memory blocks the agents looks upon. Fig. 6 schematically shows the application memory split for different mask size. The more blocks the memory is split into - the more accurate the results are, however more memory is consumed (e.g. in mask 0xFFFFFFFF each memory address is treated as its own memory block), as shown in Fig. 6

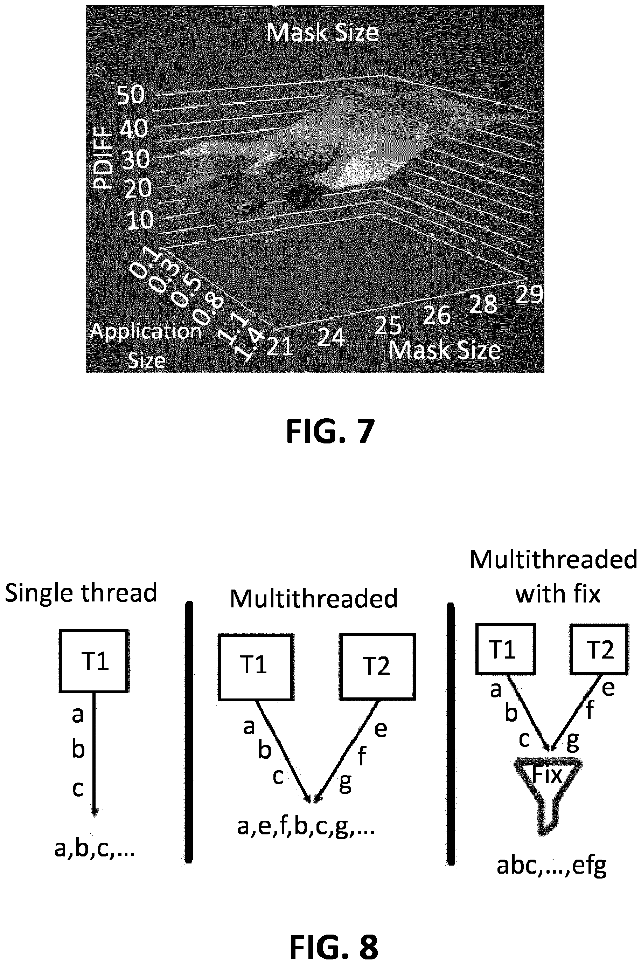

Fig. 7 schematically shows Mask size performance per app size. As it can be seen in Fig. 7 the best mask was with 28 active bits (0xFFFFFFF0). It was expected that the bigger the mask value is the model will be more accurate, but from the results, it looks like the largest mask came a bit short probably because low generalization, test error or even depends on the application size.

In an embodiment of the invention, the system of the invention CloTA works with a multi-threaded app and modified it to better trace multiple threads.

CloTA uses a kernel debugger api called "Perf", it samples the memory a returns the latest addresses. It can also provide the thread id (tid). CloTA's jump processing algorithm is simple, when a new address is received, record a new jump from the latest address to the current. This approach works well on single threaded applications. But real life apps are usually complex and concurrent. In a case of a multi-process app CloTA agent can be run per process, but in a case of multi-threaded app adjustments have to done.

The concern was that threads would report their locations out of turn, thus scrambling the transition order, hence corrupting the final EMM model. The present invention solution was to monitor each threads transition traces separately and then update the local EMM according to every thread. Fig. 8 shows a demonstration of the issues with multi-threaded applications and the suggested fix.

The assumption of the inventors was that the probability of a transition is not dependent on previous transitions. Therefore, it does not matter what each thread observed individually. In the end, the local EMM will capture the transitional probabilities between regions in memory for all threads in general. Transitions which are shared among the threads will have a higher weight, but will not eliminate the other observations due to the windowed computation of the probability score with the Laplace smoothing. The major change made in the multi-threaded version is the way the program counter (PC) is traced, as follows: the intuition behind this method was to teach the EMM model sequences per thread periodically so the model will learn the behavior of each thread and in-between threads.

Experiments

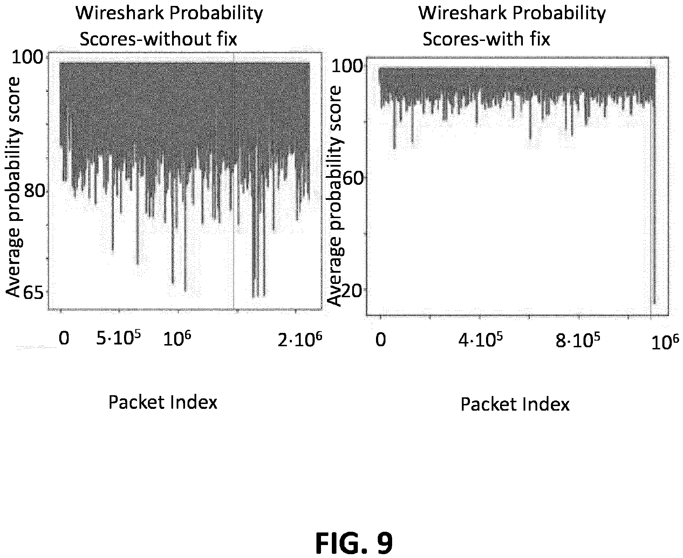

To validate the assumption of the inventors, an experiment was conducted, where a known exploit of Wireshark 1.4. 4 was used, that is causing a buffer overflow remotely (CVE: 2011-1591), a buffer overflow is when writing data into a buffer without properly checking boundaries; it is possible to write more data than the buffer size. When this is occurs, the data overflows and overwrites the code and variables in memory. This can be used to alter the programs code and alter the control-flow of the program. In the case of the present invention, the exploit caused the application to crush. After modifying the original CloTA code according to the suggested method several tests were run to adjust the parameters and found that mask size of 0xFFFFFFFC and window size of 100 were the optimal for the application. Due to the large scale of the app the training time was set to 30m to give the model enough time to learn all the states. After 10m of execution the application was attacked on purpose until it crushed. To ensure the received results, the same experiment was conducted on the base agent from the PoC (the single threaded version). Results the buffer overflow exploit we found crushed the application quickly (1-20 packets sent) therefore it is hard to detect the attack before the application closes. Fig. 9 schematically shows the multithreading experiment results. From the received results it can be seen in Fig. 9 that the model of the invention has successfully detected the attack. Before the attack it was steady without false positives we can also see that the P diff is large.

Algorithm 3: Multithreading fix:

    Get all active threads of the application;
    for each thread do
    get latest PC's;
    handle them like a single threaded app;
    end

In another embodiment of the invention the participants (for example the devices of the IoT network) share models one with each other. These models are sent in the network and may cause over load traffic. The method of the present invention performs a smart load balancing so that the traffic load will be reduced. This method for load balancing of the present invention comprises the steps of: as long as a model is newer the participants share the model in a high frequency, to increase the learning process with time. However, as the model is older and more established, the participant will share the model less and less. In that way the load on the network is reduced.

Although embodiments of the invention have been described by way of illustration, it will be understood that the invention may be carried out with many variations, modifications, and adaptations, without exceeding the scope of the claims.

**Claims**

1. A method for collaboration of remote participants in a distributed manner with no central server, on training an anomaly detection model, based on each of the local observations of said participants, wherein, a block-chain protocol is used where the blocks are the current anomaly detection models of a subset of participants; said method comprises the steps of:

   a. introducing to each of said participants an agent configured to maintain a local model of each participant's application behavior;
   b. observing, by a first agent, the behavior of a participant application;
   c. recording, by the first agent, new intelligence by updating the local model with new observations;
   d. adding, by the first agent, the updated local model to a partial block in a blockchain;
   e. sending the blockchain to the agents of the other participants;
   f. verifying, by each agent of the other participants against its own partial blocks, that the received partial block is longer than its own partial block, and that the received partial block is safe; and
   g. replacing the local model of each agent of the other participants with the updated local model from the verified partial block.

2. A method according to claim 1 wherein the participants are IoT devices connected to each other over a network.

3. A method according to claim 1, further comprising ensuring that the collaboration is safe in the case where an adversary attacks one or more of the participants by feeding false information; by performing self-attestation, to check if a combined model is safe and model-filtration, to remove possible manipulations from combined models.

4. A method according to claim 1, further comprising performing load balancing of the network, wherein the participants shares new models in a high frequency and share an established and old model in a low frequency.

5. A method for efficiently detecting abnormal program control flow, comprising the steps of:

   a. by tracking jumps between region of the program memory space, and
   b. modeling the sequence of said jumps with a probabilistic model.

6. A method according to claim, wherein the probabilistic model is an Extensible Markov Model (EMM) model.

7. A method according to claim 6, wherein the Extensible Markov Model (EMM) is trained in a distributed manner by the participants.

8. A system for collaboration of remote participants in a distributed manner with no central server, on training an anomaly detection model, based on each of the local observations of said participants, wherein, a block-chain protocol is used and where blocks of the blockchain are the current anomaly detection models of a subset of participants.

9. A system according to claim 8, comprising:

   c. an agent for each participant, configured to maintain a local model which captures behavior of an application that is running on the other participants;
   d. a second agent for observing the behavior of a participant application, recording new intelligence by updating said local model with new observations, adding the updated local model to a partial block in a blockchain and sending the blockchain to the agents of the other participants;

   wherein each agent of the other participants verifies against its own partial blocks, that the received partial block is longer than its own partial block, and that the received partial block is safe, and that the length of the blockchain is equal to or longer than the local blockchain of said participant;
   wherein the local model of each agent of the other participants is replaced with the updated local model from the verified partial block.

**FIG. 1A**

208

Yes →

Replace local partial block with received partial block

No is a verified model?

No →

Sleep 5 seconds

201

No →

207

Combine partial block as the model

← Yes

The received Partial block is longer than the local partial block?

205

Receive chain

No

204

Replace M_L with the combined model from the newest closed block

Replace local chain with received chain's Closed blocks

← Yes

203

Is longer than local chain?

No

202

**FIG. 1B**

303

BROADCAST LOCAL
BLOCKCHAIN
(BLOCKS + PARTIAL)

SLEEP T

301

UPDATE REPORT IN
LOCALLY STORED
PARTIAL BLOCK

302

# FIG. 1C

EP 3 528 457 A2

**Agent G**

401

**Agent Y**

402

$$1. B_{n+1}^{(1)} = \{S_G(M_{G,L}^{n} seed_{n+1})\}$$

**Agent R**

403

| Block chain |
| --- |
| $B_{n-N}$ <br> .... <br> $B_{\_n}$ |

**Agent B**

404

| Blockchain |
| --- |
| $B_{n-N}, ........, B_n$ |

| Blockchain |
| --- |
| $B_{n-N}, ........, B_n$ |

**FIG. 2A**

EP 3 528 457 A2

**Agent G**

401

$$2. B_{n+1}^{(2)} = \{S_G(M_{G,L}^n seed_{n+1}),\} \{S_B(M_{B,L}^n seed_{n+1})\}$$

**Agent Y**

402

| Blockchain |
|---|
| $B_{n-N}, \ldots\ldots, B_n$ |

**Agent R**

| Block chain |
|---|
| $B_{n-N}$ .... $B_{\_n}$ |

403

**Agent B**

404

| Blockchain |
|---|
| $B_{n-N}, \ldots\ldots, B_n$ |

**FIG. 2B**

EP 3 528 457 A2

4.

$$M_R^{n+1} \leftarrow \bigcup_k M$$

$$M \in \{M: \forall n-N+1 \le i \le n+1, \forall M \in B_l\}$$

Blockchain

4.

$$\dots, B_n, \boxed{B_{n+1}}$$

Agent R

403

3.

$$\{B_i\}_{i=n+1-N}^{n+1}$$

$$B_{n+1} = B_{n+1}^{(3)} =$$

$$\begin{pmatrix} \{S_G(M_{G,L}^n seed_{n+1}),\} \\ \{S_B(M_{B,L}^n seed_{n+1}),\} \\ \{S_Y(M_{Y,L}^n seed_{n+1})\} \end{pmatrix}$$

**FIG. 2C**

**FIG. 3**

**FIG. 4**

**FIG. 5**

0x00000000          0x80000000          0xC0000000          0xE0000000

**FIG. 6**

**FIG. 7**

**FIG. 8**

FIG. 9